# FASCICULE DE BREVET EUROPEEN

(11) **EP 1 776 612 B1**
(45) Date de publication et mention de la délivrance du brevet: **01.10.2014**
(21) Numéro de dépôt: 05791943.3
(22) Date de dépôt: 20.07.2005
(51) Int. Cl.: G02F 1/153

(54) **SYSTEME ELECTROCHIMIQUE COMPORTANT AU MOINS UNE ZONE DE MARGEAGE PARTIEL**
ELEKTROCHEMISCHES SYSTEM MIT MINDESTENS EINER TEILMONTAGEZONE
ELECTROCHEMICAL SYSTEM COMPRISING AT LEAST ONE PARTIAL MAKING UP ZONE

(30) Priorité: 04.08.2004 FR 0451786
(43) Date de publication de la demande: 25.04.2007
(73) Titulaire: Sage Electrochromics, Inc., Faribault, MN 55021 (US)
(72) Inventeur: VALENTIN, Emmanuel, F-94420 LE PLESSIS TREVISE (FR); DUBRENAT, Samuel, F-75017 PARIS (FR)
(74) Mandataire: Colombier, Christian
(86) Numéro de dépôt international: PCT/FR2005/050596
(87) Numéro de publication internationale: WO 2006/021707

(56) Documents cités:
- FR-A- 2 781 084
- US-A- 5 657 150
- US-A- 5 724 175
- US-A- 5 770 331
- US-A1- 2004 053 125

## Description

La présente invention concerne le domaine des dispositifs électrochimiques comportant au moins une couche électrochimiquement active susceptible d'insérer réversiblement et simultanément des ions et des électrons, en particulier des dispositifs électrochromes. Ces dispositifs électrochimiques sont notamment utilisés pour fabriquer des vitrages dont la transmission lumineuse et/ou énergétique ou la réflexion lumineuse et/ou énergétique peuvent être modulées au moyen d'un courant électrique.

Si l'on prend l'exemple particulier des systèmes électrochromes, on rappelle que ces derniers, de manière connue, comportent au moins une couche d'un matériau capable d'insérer de façon réversible et simultanée des cations et des électrons et dont les états d'oxydation correspondant aux états inséré et désinséré sont de coloration distincte, un des états étant généralement transparent.

De nombreux systèmes électrochromes sont construits sur le modèle suivant dit 'à cinq couches' : TC1 / EC1 / EL / EC2 / TC2. TC1 et TC2 sont des matériaux conducteurs électroniques, EC1 et EC2 sont des matériaux électrochromes capables d'insérer de façon réversible et simultanée des cations et des électrons et EL est un matériau électrolyte qui est à la fois un isolant électronique et un conducteur ionique. Les conducteurs électroniques sont connectés à une alimentation électrique externe et l'application d'une différence de potentiel adaptée entre les deux conducteurs électroniques commande le changement de coloration du système. Sous l'effet de la différence de potentiel les ions se désinsèrent d'un matériau électrochrome et s'insèrent dans l'autre matériau électrochrome en passant par le matériau électrolyte. Les électrons sont extraits d'un matériau électrochrome pour aller dans l'autre matériau électrochrome via les conducteurs électroniques et le circuit d'alimentation externe pour contrebalancer les charges et assurer l'électroneutralité des matériaux. Le système électrochrome est généralement déposé sur un support transparent ou non, de nature organique ou minérale, qui prend alors le nom de substrat. Dans certains cas deux substrats peuvent être utilisés, soit chacun possède une partie du système électrochrome et le système complet est obtenu par assemblage des deux substrats, soit un substrat comporte l'ensemble du système électrochrome et l'autre est destiné à protéger le système.

Lorsque le système électrochrome est destiné à travailler en transmission, les matériaux électroconducteurs sont généralement des oxydes transparents dont la conduction électronique a été amplifiée par dopage tels que In₂O₃:Sn, In₂O₃:Sb, ZnO:Al ou SnO₂:F. L'oxyde d'indium dopé à l'étain (In₂O₃:Sn ou ITO) est fréquemment retenu pour ses propriétés de conductivité électronique élevée et son absorption lumineuse faible. Lorsque le système est destiné à travailler en réflexion, l'un des matériaux électroconducteurs peut être de nature métallique.

L'un des matériaux électrochromes le plus utilisé et le plus étudié est l'oxyde de tungstène, qui passe d'une coloration bleue à une coloration transparente selon son état d'insertion. C'est un matériau électrochrome à coloration cathodique, c'est-à-dire que son état coloré correspond à l'état inséré (ou réduit) et son état décoloré correspond à l'état désinséré (ou oxydé). Lors de la construction d'un système électrochrome à 5 couches il est d'usage de lui associer un matériau électrochrome à coloration anodique tel que l'oxyde de nickel ou l'oxyde d'iridium dont le mécanisme de coloration est complémentaire. Il s'ensuit une exaltation du contraste lumineux du système. Il a également été proposé d'utiliser un matériau optiquement neutre dans les états d'oxydation concernés, comme par exemple l'oxyde de cérium. Tous les matériaux précédemment cités sont de nature inorganique mais il est possible aussi d'associer des matériaux organiques comme les polymères conducteurs électroniques (polyaniline...) ou le bleu de Prusse à des matériaux électrochromes inorganiques, voire de n'utiliser que des matériaux électrochromes organiques. Les cations sont généralement des ions monovalents de petite taille comme H⁺, Li⁺ mais il est aussi possible d'utiliser des ions Ag⁺ ou K⁺.

Les matériaux électrolytes ont pour fonction de permettre le passage réversible des ions d'un matériau électrochrome à l'autre tout en interdisant le passage des électrons. On attend généralement des électrolytes qu'ils possèdent une conductivité ionique élevée et qu'ils se comportent de façon passive lors du passage des ions. Leur nature est adaptée au type d'ions utilisés pour la commutation électrochrome. Les électrolytes peuvent se présenter sous la forme d'un polymère ou d'un gel, par exemple un polymère à conduction protonique ou un polymère à conduction d'ions lithium. L'électrolyte peut aussi être une couche minérale, notamment à base d'oxyde de tantale.

Le choix des matériaux est guidé par leurs propriétés optiques mais aussi par des considérations de coût, de disponibilité, de facilité de mise en oeuvre et de durabilité du système. On emploie ici les termes 'durables' et 'durabilité' dans le sens de la conservation des propriétés lumineuses des systèmes au long de leur utilisation.

Lorsque tous les éléments constituants le système électrochrome sont de nature inorganique on parle de systèmes 'tout-solide', tels que ceux décrits dans le brevet EP-0 867 752. Lorsque certains matériaux sont de nature inorganique et que certains matériaux sont de nature organique on parle de systèmes mixtes, tels que ceux décrits dans les brevets européens EP-0 253 713 et EP-0 670 346 pour lesquels l'électrolyte est un polymère à conduction protonique, ou ceux décrits dans les brevets EP-0 382 623, EP-0 518 754 ou EP-0 532 408 pour lesquels l'électrolyte est un polymère à conduction d'ions lithium.

Il est possible d'insérer un matériau supplémentaire entre l'électrolyte et l'un au moins des matériaux électrochromes, et ce afin de modifier la nature de l'interface et/ou d'améliorer la durabilité du système. Le matériau ajouté peut ne pas remplir toutes les conditions habituellement attendues d'un électrolyte (par exemple posséder une résistance électrique moins élevée ou être un matériau électrochrome), la présence de l'électrolyte initial garantissant au multi-couche ou au multi-matériau ainsi créé de favoriser le passage des ions tout en interdisant le passage des électrons. Un tel exemple est disponible dans le brevet EP-0 867 752 concernant un système électrochrome tout-solide dans lequel une couche d'oxyde de tungstène a été insérée entre l'oxyde d'iridium (le matériau électrochrome) et l'oxyde de tantale (l'électrolyte). La même démarche peut être employée dans le cas du système mixte décrit dans l'article de K.S. Ahn et al., Appl. Phys. Lett. 81 (2002), 3930. Les matériaux électrochromes sont de l'hydroxyde de nickel et de l'oxyde de tungstène et l'électrolyte est un polymère solide à conduction protonique. Une couche supplémentaire d'oxyde de tantale a été insérée entre chaque matériau électrochrome et le polymère électrolyte car le contact direct amenait une dégradation des matériaux électrochromes.

Par extension, le multi-couche ou le multi-matériau ainsi créé prend le nom d'électrolyte car il ne participe pas au mécanisme d'insertion et de désinsertion ionique.

On trouvera la description de tels systèmes par exemple dans les brevets européens EP-0 338 876, EP-0 408 427, EP-0 575 207 et EP-0 628 849. Actuellement, on peut ranger ces systèmes dans deux catégories, selon le type d'électrolyte qu'ils utilisent :
- soit l'électrolyte se présente sous la forme d'un polymère ou d'un gel, par exemple un polymère à conduction protonique tel que ceux décrits dans les brevets européens EP-0 253 713 et EP-0 670 346, ou un polymère à conduction d'ions lithium tels que ceux décrits dans les brevets EP-0 382 623, EP-0 518 754 ou EP-0 532 408 ;
- soit l'électrolyte est une couche minérale, notamment à base d'oxyde de tantale et/ou d'oxyde de tungstène, conducteur ionique mais isolant électronique, on parle alors de systèmes électrochromes « tout solide ».

La présente invention s'intéresse plus spécifiquement à des perfectionnements apportés à des systèmes électrochimiques appartenant à catégorie des systèmes tout-solide, mais elle est aussi destinée aux systèmes mixtes, voire aux systèmes dont tous les composants sont de nature organique.

Quelle que soit la configuration adoptée, une contrainte de ce type de système électrochimique consiste à lui conférer un «effet mémoire » suffisant selon l'application envisagée. On entend par ce terme la capacité qu'a le système à se maintenir dans un état donné une fois l'alimentation électrique interrompue. Dans le cas d'un vitrage électrochrome, cet état est généralement son état coloré. En l'absence d'alimentation électrique, il tend à revenir vers son état décoloré. Le but est évidemment que cet effet mémoire puisse durer le plus longtemps possible, de manière à ce que l'utilisateur, par le biais de l'alimentation électrique du système, puisse effectivement contrôler son état de façon satisfaisante. Dans les faits, on cherche par exemple à ce que le vitrage électrochrome puisse rester à l'état coloré, hors tension, pendant plusieurs heures, 10 à 20 heures.

Dans les faits, cet objectif est difficile à atteindre, car le système doit faire face à un courant de fuite d'une couche électroconductrice à l'autre, notamment en périphérie du système, qui tend à le faire retourner dans son état d'équilibre, c'est-à-dire dans son état décoloré.

Une première solution a consisté à accepter l'existence de ces courants de fuite, et à ré-alimenter en électricité le système quand il est dans son état coloré, selon une périodicité donnée, pour les compenser.

Une seconde solution a consisté à masquer l'une des deux couches électroconductrices, c'est-à-dire à effectuer le dépôt des couches de façon à ce qu'elles soient décalées à leur périphérie, et ainsi à supprimer/ réduire le courant de fuite d'une couche à l'autre à leurs périphéries respectives. La solution est efficace, mais complique le procédé de fabrication du système : elle impose notamment de déposer âu moins une des deux couches électroconductrices en employant un masque sur le substrat porteur.

Une troisième solution décrite dans les demandes de brevet FR-2 811 778 et FR 2 821 937 utilise une découpe mécanique et/ou laser des couches pour délimiter au sein de l'empilement diverses zones isolantes et conductrices électriquement.

On connaît par le brevet US 5 657 150 un système électrochrome pour lentille présentant la structure classique suivante : (électrode 1/couche électrochrome 1/électrolyte/couche électrochrome 2/électrode 2) pour lequel il est prévu des découpes laser au sein de l'empilement afin de limiter les courants de fuite entre l'électrode 1 et l'électrode 2, la couche électrochrome 1 étant à base de WOx qui est un matériau isolant électriquement. Le document US 2004/0053125 introduit un vitrage électrochrome utilisant des zones de margeage.

Bien que ces techniques apportent déjà une solution en terme d'amélioration de l'effet mémoire, celle-ci n'est pas encore suffisante pour répondre positivement aux exigences des constructeurs automobiles exprimées dans leur cahier des charges. Il existe encore des court-circuits au niveau des découpes et de l'ensemble de la connectique des vitrages.

Le but de l'invention est alors de remédier à ces inconvénients, en proposant notamment un nouveau procédé de traitement des dispositifs électrochimiques décrits plus haut afin d'améliorer leurs performances, tout particulièrement afin de limiter/ supprimer les risques de court- circuits, les courants dits de fuite et, de fait, d'augmenter leur « effet mémoire », ceci en privilégiant la simplicité dans sa mise en oeuvre.

L'invention a tout d'abord pour objet un procédé de traitement d'un dispositif électrochimique, comportant au moins un substrat porteur muni d'un empilement de couches fonctionnelles comprenant au moins une couche électrochimiquement active susceptible d'insérer réversiblement et simultanément des ions et des électrons, cette couche électrochimiquement active étant disposée entre deux couches électroconductrices Il s'agit notamment d'un dispositif électrochimique du type électrochrome, avec un empilement de couches fonctionnelles dont au moins, successivement :
- une première couche électroconductrice, une première couche électrochimiquement active susceptible d'insérer de manière réversible des ions comme des cations tels que H+, Li+ ou des anions tels que OH-, notamment en un matériau électrochrome anodique (ou respectivement cathodique), une couche d'électrolyte, une seconde couche électrochimiquement active susceptible d'insérer de manière réversible lesdits ions, notamment en un matériau électrochrome cathodique (ou respectivement anodique), une seconde couche électroconductrice.

Le procédé de l'invention se caractérise par le fait que l'on vient inhiber localement, au niveau d'une première zone de margeage partiel (A), la fonctionnalité d'au moins une des couches fonctionnelles, à l'exception d'une des couches électroconductrices et de l'une des couches électrochimiquement actives, notamment à l'exception de la première couche électroconductrice (celle la plus proche du substrat porteur) et de la première couche électrochimiquement active (celle qui est associée à ladite première couche électroconductrice) et l'on vient inhiber localement, au niveau d'une deuxième zone de margeage total (B) voisine de la première zone de margeage partiel (A), la fonctionnalité de toutes les couches fonctionnelles sur la totalité de l'épaisseur de l'empilement de couches, ladite deuxième zone de margeage total (B) laissant apparaître au moins une portion de surface dudit substrat porteur.

Dans d'autres modes de réalisation préférés de l'invention, on peut éventuellement avoir recours en outre à l'une et/ou à l'autre des dispositions suivantes :
- on vient inhiber localement, la fonctionnalité de la première couche électroconductrice, de manière à délimiter tout autour dudit empilement une troisième zone de margeage total périphérique dépourvue de couches, ladite troisième zone de margeage total laissant apparaître au moins une portion de surface dudit substrat porteur,
- on vient inhiber localement la fonctionnalité de la première couche électroconductrice, de telle sorte que la troisième zone de margeage total soit située en périphérie de la première zone de margeage partiel et/ou de la deuxième zone de margeage total,
- on inhibe localement la fonctionnalité d'au moins une des couches de l'empilement en la (les) dégradant sur son (leur) épaisseur, par un traitement thermique ou par irradiation laser ou par une attaque mécanique,
- le traitement est effectué une fois le substrat muni de l'ensemble des couches fonctionnelles de l'empilement,
- on isole localement la fonctionnalité électrique de la dernière couche électroconductrice (celle la plus éloignée du substrat porteur) par le dépôt d'une bande isolante au niveau d'au moins une portion de surface dudit empilement, ladite portion de surface étant sensiblement positionnée au dessus de la première zone de margeage partiel et/ou de la deuxième zone de margeage total.

Selon un autre aspect de l'invention, celle-ci vise l'application du procédé de traitement précédemment décrit en vue de réduire/ supprimer les court-circuits périphériques dans l'empilement de couches fonctionnelles en fonctionnement afin d'améliorer l'effet mémoire dudit empilement.

Selon encore un autre aspect de l'invention, celle-ci vise également un dispositif électrochimique de type électrochrome traité selon le procédé conforme à l'une des caractéristiques précédentes comprenant au moins un substrat porteur muni d'un empilement de couches fonctionnelles définissant une zone de dépôt et comprenant successivement :
- une première couche électroconductrice (la plus proche du substrat),
- une première couche électrochimiquement active susceptible d'insérer de manière réversible des ions comme des cations tels que H+, Li+ ou des anions tels que OH-, notamment en un matériau électrochrome anodique (ou respectivement cathodique),
- une couche d'électrolyte,
- une seconde couche électrochimiquement active susceptible d'insérer de manière réversible lesdits ions, notamment en un matériau électrochrome cathodique (ou respectivement anodique),
- une seconde couche électroconductrice,
ledit dispositif se caractérise en ce que l'empilement de couches fonctionnelles est désactivé, à l'exception de la première couche électrochimiquement active, au niveau d'au moins une première zone de margeage partiel située le long d'au moins un bord de ladite zone de dépôt.

Dans d'autres modes de réalisation préférés de l'invention, on peut éventuellement avoir recours en outre à l'une et/ou à l'autre des dispositions suivantes :
- l'empilement de couches fonctionnelles est désactivé, à l'exception de la première couche électrochimiquement active, sur la périphérie de ladite zone de dépôt et respectivement le long de chacun des bords de ladite zone de dépôt,
- l'empilement de couches fonctionnelles est désactivé, sur une partie au moins de sa périphérie, au niveau d'au moins une deuxième zone de margeage total située le long d'au moins un bord de ladite zone de dépôt,
- la première zone de margeage partiel désactivée est voisine de la deuxième zone de margeage total, la deuxième zone de margeage total étant positionnée à l'extérieur de la première zone de margeage partiel,
- la première couche électroconductrice est désactivée sur sa périphérie, au niveau d'une troisième zone de margeage total située au voisinage du bord du substrat porteur,
- le dispositif électrochimique comporte des première et des deuxième amenées de courant en connexion électrique avec la première couche électroconductrice,
- les première et deuxième amenées de courant sont situées respectivement selon deux bords contigus du substrat porteur,
- les premières ou les deuxièmes amenées de courant sont en connexion électrique par l'intermédiaire d'un réseau de fils conducteurs/de bandes conductrices, éventuellement ondulés, ledit réseau étant par ailleurs en connexion électrique au niveau de la deuxième couche électroconductrice (la plus éloignée du substrat),
- le réseau conducteur comporte une pluralité de fils essentiellement métalliques disposés en surface d'une feuille en polymère, notamment du type thermoplastique,
- les fils/bandes sont disposés essentiellement parallèlement les uns aux autres, de préférence selon une orientation essentiellement parallèle à la longueur ou la largeur de la deuxième couche électroconductrice, au moins une des extrémités desdits fils/bandes dépassant de la zone du substrat couverte par ladite deuxième couche électroconductrice sur au moins un de ses bords opposés, notamment d'au moins 0,5 mm,
- l'extrémité des fils/bandes se trouvant au niveau de la première zone de margeage partiel et/ou de la deuxième zone de margeage total est isolée électriquement du contact avec la zone active de la première couche électroconductrice, notamment par interposition de bande(s) de matériau isolant, lesdites bandes étant interposées entre la deuxième couche électroconductrice et la dite extrémité des fils/bandes,
- au moins une des amenées de courant est sous forme d'un clinquant, notamment une bande métallique, ou sous forme d'un ou plusieurs fils conducteurs, ou sous forme d'une amenée ponctuelle en matériau conducteur,
- au moins une des amenées de courant est réalisée à partir d'un émail conducteur électriquement, déposé entre une portion de surface du substrat porteur et la première couche électroconductrice,
- l'amenée de courant présente en surface une pluralité de rainures positionnées sensiblement transversalement à un axe principal de ladite amenée de courant de manière à délimiter des canaux,
- l'empilement électroactif recouvre une zone de dépôt du substrat porteur qui est un polygone, un rectangle, un losange, un trapèze, un carré, un cercle, un demi- cercle, un ovale, tout parallélogramme,
- il s'agit d'un système électrochrome, notamment du type « tout-solide », d'un système viologène, d'un système à cristaux liquides, d'un système à valve optique ou d'un système photovoltaïque,
- il s'agit d'un vitrage électrochrome « tout-solide », notamment de structure feuilletée,
- le vitrage électrochrome comprend au moins un verre teinté dans la masse et/ou au moins un verre bombé et/ou un verre trempé,
- il comporte également au moins un des revêtements suivants: revêtement réfléchissant les infra-rouges, revêtement hydrophile, revêtement hydrophobe, revêtement photocatalytique à propriétés anti-salissures, revêtement anti- reflets, revêtement de blindage électromagnétique,
- le substrat porteur est rigide, semi-rigide ou flexible,

D'autres détails et caractéristiques avantageux de l'invention ressortent de la description faite ci- après en référence aux dessins annexés qui représentent :
- la figure 1 est vue de dessus d'un système électrochimique selon l'invention,
- la figure 2 est une vue en coupe selon I-I de la figure 1,
- la figure 3 est une vue en coupe selon II-II de la figure 1,

Sur les dessins annexés, certains éléments peuvent être représentés à des dimensions plus grandes ou plus petites que dans la réalité, et ce afin de faciliter la compréhension de la figure.

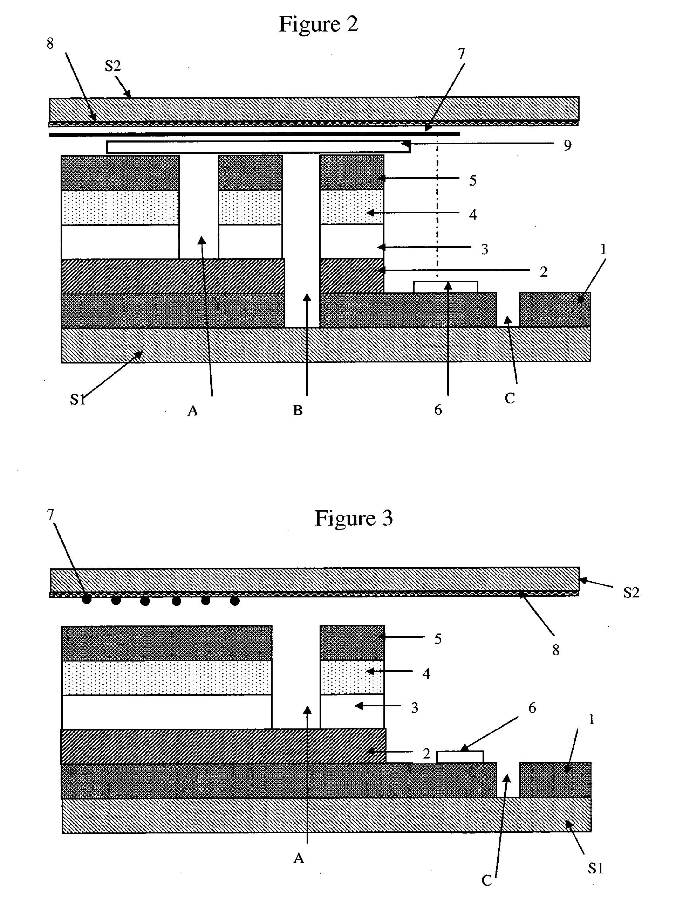

L'exemple illustré par les figures 2 et 3, concerne un système électrochimique 1 selon l'invention qui peut être intégré au sein d'un toit automobile. Il comprend successivement, de l'intérieur vers l'extérieur de l'habitacle, deux verres S1, S2, qui sont des verres clairs (ils peuvent aussi être teintés) silico-sodo-calciques de respectivement 2,1 mm ; 2,1 mm d'épaisseur par exemple.

Les verres S1 et S2 sont de même taille et de forme globalement rectangulaire.

Le verre S1 représenté en figures 2 et 3 est revêtu d'un empilement de couches minces de type électrochrome tout solide.

Le verre S1 est feuilleté au verre S2 par une feuille 8 thermoplastique en polyuréthane (PU) de 0,8 mm d'épaisseur (elle peut être remplacée par une feuille d' éthylènevinylacétate (EVA) ou de polyvinylbutyral (PVB).

L'empilement de couches minces électrochrome « tout solide » comporte un empilement actif placé entre deux matériaux conducteurs électroniques appelés aussi collecteurs de courant 1 et 5. Le collecteur 1 est destiné à être au contact du substrat S1 et constitue la première couche électroconductrice (la plus proche du substrat porteur) de l'empilement de couches fonctionnelles, tandis que le collecteur 5 constitue la deuxième couche électroconductrice (la plus éloignée du substrat porteur) de l'empilement de couches fonctionnelles.

Les collecteurs 1 et 5 et l'empilement actif peuvent être soit sensiblement de dimensions et de formes identiques, ou soit sensiblement de dimensions et de formes différentes, et on conçoit alors que le cheminement des collecteurs 1 et 5 sera adapté en fonction de la configuration. Par ailleurs, les dimensions des substrats en particulier S1 peuvent être essentiellement supérieures à celles de 1, 5 et du système actif.

Les collecteurs 1 et 5 sont de type métallique ou du type TCO (Transparent Conductive Oxide) en ITO, SnO₂:F, ZnO:Al, ou être un multi-couche du type TCO/métal/TCO, ce métal étant choisi notamment parmi l'argent, l'or, le platine, le cuivre.

Il peut s'agir également d'un multi-couche de type NiCr/métal/NiCr, le métal étant choisi également notamment parmi l'argent, l'or, le platine, le cuivre.

Selon les configurations, ils peuvent être supprimés et dans ce cas des amenées de courant sont directement en contact avec l'empilement actif.

Le vitrage incorpore des amenées de courant 6 qui permettent de commander le système actif via une alimentation électrique. Ces amenées de courant sont du type de ceux utilisés pour les vitrages chauffants (à savoir clinquant, fils ou similaire).

Une forme préférée de réalisation du collecteur 1 consiste à déposer sur la face interne du substrat porteur S1 une première couche SiOC de 50 nm surmontée d'une seconde couche en SnO₂:F de 400 nm (deux couches de préférence déposées successivement par CVD sur le verre float avant découpe).

Une seconde forme de réalisation du collecteur 1 consiste à déposer sur le substrat porteur S1 bicouche constitué d'une première couche à base de SiO₂ dopée ou non (notamment dopé avec de l'aluminium ou du bore) d'environ 20 nm surmontée d'une seconde couche d'ITO d'environ 100 à 600 nm (deux couches de préférence déposées successivement, sous vide, par pulvérisation cathodique assistée par champ magnétique et réactive en présence d'oxygène éventuellement à chaud).

Encore une autre forme de réalisation du collecteur 1 consiste à déposer sur le substrat porteur S1 une mono couche constituée d'ITO d'environ 100 à 600 nm (une couche de préférence déposée, sous vide, par pulvérisation cathodique assistée par champ magnétique et réactive en présence d'oxygène et à chaud)

Le collecteur 5 est une couche d'ITO de 100 à 500 nm également déposée par pulvérisation cathodique réactive assistée par champ magnétique sur l'empilement actif, éventuellement à chaud.

L'empilement actif représenté en figures 2 et 3 se décompose de la façon suivante :
- une couche de matériau électrochrome 2 anodique en oxyde d'iridium hydraté de 40 à 100 nm, alliée ou non à d'autres métaux, cette couche de matériau électrochrome constitue une première couche électrochimiquement active susceptible d'insérer réversiblement et simultanément des ions et des électrons (en variante non représentée sur les figures, la couche de matériau anodique est à base d'une couche en oxyde de nickel hydraté de 40 à 300 nm),
- une couche 3 en oxyde de tantale hydraté ou d'oxyde de silice hydraté ou d'oxyde de zirconium hydraté de 100 nm ou un mélange de ces derniers,
- éventuellement, une couche en oxyde de tungstène de 100 nm est insérée entre la couche 2 et la couche 3 (non représentée sur les figures 2 et 3),
- une couche de matériau électrochrome 4 cathodique à base d'oxyde de tungstène hydraté de 200 à 500 nm, préférentiellement de 300 et 400 nm, notamment voisine de 370 nm, cette couche de matériau électrochrome constitue une deuxième couche électrochimiquement active susceptible d'insérer réversiblement et simultanément des ions et des électrons.

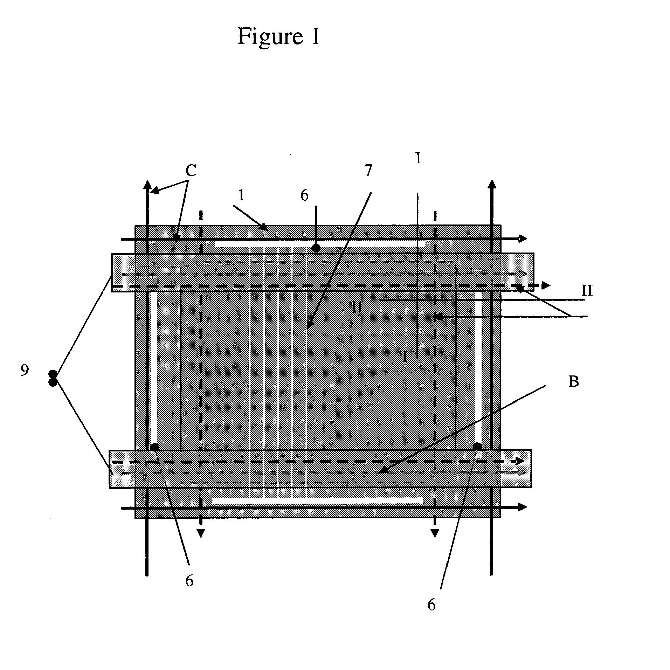

Par ailleurs, le vitrage représenté en figures 1, 2 et 3 incorpore (non représenté sur les figures) un premier joint périphérique en contact avec les faces 2 et 3, ce premier joint étant adapté pour réaliser une barrière aux agressions chimiques extérieures.

Un deuxième joint périphérique est en contact avec le chant de S1, le chant de S2 et la face externe (celle dirigée vers l'extérieur), de manière à réaliser : une barrière, un moyen de montage avec le véhicule, une étanchéité entre l'intérieur et l'extérieur, une fonction esthétique, un moyen d'incorporation d'éléments de renfort.

L'empilement actif est alors margé (de manière à inhiber la fonctionnalité d'au moins une couche électriquement active et/ou électrochimiquement active de l'empilement de couches fonctionnelles) sur tout ou partie de sa périphérie de gorges réalisées par des moyens mécaniques ou par des moyens thermiques, notamment par attaque par rayonnement laser, éventuellement pulsé, et ce afin de limiter les fuites électriques périphériques.

L'empilement actif est ainsi désactivé, à l'exception de la première couche électrochimiquement active (celle qui est déposée sur la première couche électroconductrice -la plus proche du substrat porteur), sur une partie au moins de sa périphérie, au niveau d'au moins une première zone de margeage située le long d'au moins un bord de la zone sur laquelle est déposé l'empilement de couches fonctionnelles. Cette première zone de margeage A est dite « partiel » compte tenu du fait qu'une partie des couches de l'empilement (sur leur épaisseur) n'a pas été détruite, à savoir dans ce cas, la première couche électroconductrice 1 et la première couche électrochimiquement active 2.

On inhibe donc localement la fonctionnalité d'au moins une des couches en margeant celle(s)-ci sur son (leurs) épaisseur(s) selon une ligne fermée permettant de délimiter la zone inactive de l'empilement entre ladite ligne fermée et le bord/chant de l'empilement (en considérant que toutes les couches ou la majorité d'entre elles ont des dimensions voisines et/ou sont exactement superposées les unes aux autres. En fait, usuellement, la première couche électroconductrice est de dimensions un peu supérieures à toutes les autres, pour faciliter sa connexion électrique avec la seconde couche, ce qui permet de poser sur sa surface qui « dépasse » de l'empilement les éléments de connectique nécessaires communément appelés amenées de courant 6.

Ce margeage partiel A permet ainsi d'obtenir une rainure qui vient inhiber le circuit comme expliqué plus haut et laisser la périphérie du dispositif inactive fonctionnellement.

De préférence, on marge partiellement, sur chacun des côtés de l'empilement, selon une ligne fermée ayant, dans des proportions plus réduites, un profil voisin ou identique à celui du bord de l'empilement (ou du bord de la première couche qui subit le margeage, si les couches sous-jacentes sont de dimensions légèrement différentes, notamment la première comme évoqué plus haut). On a ainsi une bordure inactive qui « suit » le pourtour du dispositif et aisément camouflable.

On opère le margeage partiel A par tout moyen mécanique, notamment tranchant, ou avantageusement par irradiation laser. Un mode de réalisation consiste à laisser le dispositif immobile pendant le traitement et à monter le moyen mécanique/ l'émetteur laser sur un organe mobile, un autre mode de réalisation consistant à faire l'inverse.

D'autres moyens peuvent être utilisés pour réaliser le margeage par abrasion. Ainsi, on peut utiliser un émetteur de jet de gaz ou de liquide sous pression (azote, air), ou un émetteur de particules abrasives (billes de verre, de corindon, grenaille, billes de CO₂ solide...

Cette opération de margeage peut être opérée par un faisceau laser, il peut être intéressant de choisir un état coloré, pour augmenter l'absorption du laser par l'empilement à la longueur d'onde utilisée.

Cet empilement actif de couches fonctionnelles possède au moins une deuxième zone de margeage B dont la fonctionnalité a été désactivée. Cette deuxième zone de margeage B est dite une zone de margeage total car on vient inhiber la fonctionnalité de toutes les couches de l'empilement y compris la fonctionnalité de la première couche électroconductrice 1(celle la plus proche du substrat porteur).

On vient donc d'une manière similaire à la première zone de margeage A inhiber localement la fonctionnalité de toutes couches de l'empilement en les dégradant sur leurs épaisseurs et au niveau de leurs périphéries, notamment par un traitement mécanique ou par une irradiation laser appropriés.

Cette deuxième zone B de margeage total est positionnée en retrait et dirigée vers l'extérieur par rapport au premier margeage partiel ou sélectif.

Au sens de l'invention et comme cela apparaît sur les figures et en partant du centre et en s'écartant vers les bords périphériques de l'empilement, les zones de margeage partiel A délimitent, sur cet exemple non limitatif, quatre premières zones, chacune étant sensiblement parallèle à un bord de l'empilement, puis en retrait de ces premières zones et encore plus vers l'extérieur apparaissent les zones de margeage total B (au nombre de 2 sur les figures).

Les zones de margeage total B sont sensiblement de direction parallèle à deux zones de margeage partiel A et selon un premier mode de réalisation, ces 2 zones de margeage partiel A et les zones de margeage total B sont toujours disjointes.

Selon un deuxième mode de réalisation, ces 2 zones de margeage partiel A touchent ponctuellement des zones de margeage total B, sans toutefois qu'une zone de margeage total B chevauche une zone de margeage partiel A et vienne au contact d'une portion de surface de l'empilement dirigée vers l'intérieur.

Dans l'exemple représenté, il existe deux zones de margeage total B respectivement positionnées selon deux bords opposés et parallèles de l'empilement actif. Bien entendu, selon les configurations envisagées, on peut concevoir des substrats comportant plus de 2 zones de margeage total B disposées selon des bords adjacents (ou non), ou voire même des configurations à une seule zone de margeage total B.

Comme cela apparaît sur les figures 1, 2 ou 3, le substrat S1 porteur comporte une troisième zone de margeage C. Cette troisième zone de margeage C est dite une zone de margeage total. Elle diffère cependant des deuxièmes zones de margeage total B par le fait que l'on vient inhiber, non pas les couches sur la totalité de l'épaisseur de l'empilement actif, mais simplement on vient inhiber la fonctionnalité de la première couche électroconductrice 1 (la plus proche du substrat porteur) de manière à venir faire apparaître au niveau de la troisième zone de margeage total C, au moins une portion de surface du substrat porteur.

On vient donc d'une manière similaire à la première zone de margeage partiel A et/ou à la deuxième zone de margeage total B procéder à l'inhibition par un traitement mécanique ou par une irradiation laser appropriés.

Cette troisième zone de margeage total C est positionnée en retrait de la zone destinée au dépôt de l'empilement et au plus proche des bords/chants du substrat porteur. Comme cela apparaît sur la figure 1, cette troisième zone de margeage total C est en particulier située en retrait par rapport aux amenées de courant des couches électroconductrices inférieure et supérieure.

On constate que l'irradiation avec une lumière laser qui est employée selon une manière préférée provoque une véritable ablation localisée. Sa précision et son efficacité rendent le laser très intéressant, il suffit ensuite d'en moduler les paramètres de fonctionnement.

Comme on peut le voir sur les figures, l'empilement actif comporte une deuxième couche électroconductrice 5 (la plus éloignée du substrat porteur) qui constitue l'électrode supérieure et qui est associée à un réseau 7 de fils conducteurs ou de bandes conductrices électriquement. Comme on l'a vu plus haut, la couche conductrice supérieure 5 est généralement de mêmes dimensions que l'empilement actif et déposée sur la même ligne de dépôt (pulvérisation cathodique). Il s'agit généralement de couches d'oxyde dopé du type ITO ou ZnO dopé Al, ou de couche de métal du type argent éventuellement associée à une ou des couches protectrices éventuellement elles aussi conductrices (Ni, Cr, NiCr,..), et à une ou des couches protectrices et/ou à rôle optique, en matériau diélectrique (oxyde, nitrure, fluorure).

En utilisant ce type de réseau conducteur 7 additionnel, on déporte les amenées de courant hors de la surface couverte par la couche conductrice supérieure, en les mettant en connexion électrique non pas avec cette couche mais avec les extrémités de ces fils ou bandes, configurés de façon à dépasser de la surface de la couche conductrice. Dans sa mise en oeuvre préférée, le réseau conducteur 7 comporte une pluralité de fils métalliques, disposés en surface d'une feuille de polymère du type thermoplastique 8 : on peut venir apposer cette feuille avec les fils incrustés à sa surface sur la couche conductrice supérieure pour assurer leur contact physique et la connexion électrique. La feuille thermoplastique peut servir au feuilletage du premier substrat porteur du type verre avec un autre verre. Les fils/bandes sont disposés parallèlement les uns aux autres (ils peuvent être rectilignes ou ondulés), préférentiellement selon une orientation essentiellement parallèle à la longueur ou à la largeur de la couche conductrice supérieure. (En variante, les fils ou les bandes conductrices peuvent aussi se croiser). Les extrémités de ces fils dépassent de la zone du substrat couverte par la couche conductrice supérieure sur au moins un de ses côtés, notamment d'au moins 0,5 mm, par exemple de 3 à 10 mm. Ils peuvent être en cuivre, en tungstène, en tungstène graphité, ou encore en alliage à base de fer du type fer-nickel.

Il est judicieux d'éviter que les extrémités de ces fils ne se trouvent en contact électrique des zones au voisinage desquelles il a été effectué des zones de margeage total B et/ou partiel A. (Eviter un risque de court-circuit avec les chants de l'empilement actif). A cette fin, les extrémités des fils peuvent être isolées électriquement de ces zones par interposition de bande(s) de matériau isolant 9, par exemple à base de polymère, éventuellement adhésif, du type ruban adhésif.

La présente demande de brevet s'attache maintenant à décrire différents types d'amenées de courant 6 et leurs dispositions dans le système. En ce qui concerne l'électrode supérieure, selon une variante, les extrémités des fils/bandes du réseau conducteur mentionné plus haut peuvent être connectées électriquement à deux amenées de courant sous forme de bandes flexibles en polymère isolant recouvertes sur l'une de leur face de revêtements conducteurs. Ce type d'amenée est parfois désignée sous les termes anglais de « F.P.C. » (Flexible Printed Circuit) ou de « F.L.C. » (Flat Laminated Cable) et est déjà utilisé dans des systèmes électriques/électroniques variés. Sa flexibilité, les différentes variantes de configuration que l'on peut obtenir, le fait que l'amenée de courant se trouve isolée électriquement sur une de ses faces, rendent son utilisation très attractive dans le cas présent.

Selon une autre variante, les extrémités de ces fils sont en contact électrique avec deux zones désactivées de la couche conductrice inférieure, et ces deux zones désactivées sont en connexion électrique avec les amenées de courant destinées à l'électrode supérieure. Il peut commodément s'agir de « clips » conducteurs venant pincer le substrat porteur dans les zones précitées. C'est une solution originale que d'utiliser l'électrode inférieure pour assurer la connexion électrique de l'électrode supérieure.

En ce qui concerne les amenées de courant de l'électrode inférieure, on peut la connecter électriquement le long de deux de ses bords opposés dans des zones actives et non couvertes par l'empilement actif. Ces amenées peuvent être les clips précédemment mentionnés.

On peut aussi rassembler les amenées de courant des électrodes inférieure et supérieure sous forme de bandes flexibles évoquées plus haut. Il peut ainsi s'agir de deux bandes sensiblement identiques, chacune ayant un support en polymère isolant électrique et flexible et approximativement sous forme d'un L (bien sûr, il peut y avoir beaucoup d'autres configurations envisageables selon la forme géométrique du substrat porteur et des couches dont il est muni). Sur l'un des côtés de ce L, on a un revêtement conducteur sur une face. Sur l'autre côté du L, on a un revêtement conducteur sur la face opposée à la précédente. Ce système global d'amenées de courant est aussi constitué de deux de ces « L » sur support plastique. Associées, elles fournissent deux bandes conductrices sur une face pour une des électrodes et deux bandes conductrices sur leur face opposée pour L'autre électrode. C'est un système compact, facile à poser. A proximité de la jonction entre Les deux bords de chaque L, on a une prise électrique reliée électriquement aux revêtements conducteurs des amenées.

On peut aussi aller plus loin dans la compacité, en remplaçant ces deux L par un cadre complet : on utilise alors une bande de polymère isolant de forme approximativement rectangulaire, avec sur deux de ses bords opposés un revêtement conducteur sur une face, et ainsi que sur ses deux autres bords opposés sur l'autre face. On a alors, de préférence, plus qu'une seule prise électrique extérieure au lieu de deux. Le cadre peut être d'une pièce, ou en plusieurs parties que l'on vient assembler lors du montage.

Les amenées de courant des électrodes inférieure et/ou supérieure peuvent aussi être sous forme de clinquants conventionnels, par exemple sous forme de bandes métalliques du type cuivre éventuellement étamé.

Les amenées de courant des électrodes inférieures et/ou supérieures peuvent aussi être sous forme d'un fil conducteur (ou de plusieurs fils conducteurs assemblés). Ces fils peuvent être en cuivre, en tungstène ou en tungstène graphité et être similaires à ceux utilisés pour constituer le réseau conducteur évoqué plus haut. Ils peuvent avoir un diamètre allant de 10 à 600 µm. Ce type de fils suffit en effet à alimenter électriquement de façon satisfaisante les électrodes, et sont remarquablement discrets : il peut devenir inutile de les masquer lors du montage du dispositif.

La configuration des amenées de courant est très adaptable. On a décrit plus en détails, précédemment, des systèmes actifs sensiblement rectangulaires, mais ils peuvent avoir quantités de formes géométriques différentes, en suivant notamment la forme géométrique de leur substrat porteur: cercle, carré, demi- cercle, ovale, tout polygone, losange, trapèze, carré, tout parallélogramme... Et dans ces différents cas de figure, les amenées de courant ne sont plus nécessairement pour chaque électrode à alimenter des «paires » d'amenée de courant se faisant face. Il peut ainsi s'agir, par exemple, d'amenées de courant qui font tout le tour de la couche conductrice (ou tout au moins qui longe une bonne partie de son pourtour). C'est tout à fait réalisable quand l'amenée de courant est un simple fil conducteur. Il peut même s'agir d'amenées de courant ponctuelles, notamment quand le dispositif est de petite taille.

Le dispositif selon l'invention peut utiliser un ou plusieurs substrats en verre teinté(s) dans la masse. Avantageusement, s'il s'agit d'un vitrage feuilleté, le verre teinté dans la masse est le verre destiné à être tourné vers l'intérieur du local ou de l'habitacle, le verre extérieur étant clair. Le verre teinté permet de régler le niveau de transmission lumineuse du vitrage. Placé du côté intérieur, on limite son échauffement par absorption. Le ou Les verre(s) peut (peuvent) aussi être bombé(s), c'est le cas dans les applications en tant que toit automobile électrochrome notamment. S'il s'agit de substrats en verre ceux-ci peuvent être en verre clair ou foncé, de forme plane ou bombée, renforcés par un trempe chimique ou thermique ou simplement durcis. Leur épaisseur peut varier entre 1 mm et 15 mm, en fonction des attentes et des besoins des utilisateurs finaux. Les substrats peuvent être partiellement revêtus d'un matériau opaque, en particulier sur leur périphérie, en particulier pour des raisons esthétiques. Les substrats peuvent aussi posséder une fonctionnalité propre (issue d'un empilement d'au moins une couche de type contrôle solaire, anti-reflets, bas-émissive, hydrophobe, hydrophile...) et dans ce cas le vitrage électrochrome associe les fonctions apportées par chaque élément afin de répondre aux besoins des utilisateurs.

L'intercalaire polymère est ici utilisé dans un but d'associer les deux substrats selon la procédure de feuilletage couramment utilisée dans le monde automobile ou du bâtiment afin d'aboutir à un produit de sécurité : sécurité anti-éjection ou anti-balles pour une utilisation dans le domaine des transports et sécurité anti-effraction (anti-bris de verre) pour une utilisation dans le domaine des bâtiments. L'opération de feuilletage est aussi favorable dans le sens qu'elle isole l'empilement fonctionnel contres les agressions chimiques ou mécaniques. L'intercalaire est choisi de préférence à base d'éthylène vinylacétate (EVA) ou de ses copolymères, il peut aussi être en polyuréthane (PU), en polyvinylbutyral (PVB) en résine pluri ou mono-composants réticulable thermiquement (époxy, PU) ou aux ultraviolets (époxy, résine acrylique). L'intercalaire de feuilletage est généralement transparent, mais il peut être coloré totalement ou partiellement pour répondre aux souhaits des utilisateurs.

L'isolation de l'empilement de l'extérieur est généralement complété par des systèmes de joints placés sur les champs des substrats, voire partiellement à l'intérieur des substrats.

L'intercalaire de feuilletage peut aussi inclure des fonctions supplémentaires comme inclure une fonction anti-solaire apportée par exemple par un film plastique comportant des multicouches ITO/Métal/ITO ou un film composé d'un empilement de couches organiques.

Les couches du système actif sont préférentiellement déposées par une technique utilisant le vide, du type pulvérisation cathodique, éventuellement assistée par champ magnétique, par évaporation thermique ou assistée par un flux d'électrons, par ablation laser, par CVD (Chemical Vapor Deposition), éventuellement assistée par plasma ou par micro-ondes.

En fait, il est ici particulièrement avantageux de recourir à une technique de dépôt sous vide, notamment du type pulvérisation, car elle permet une maîtrise très fine des caractéristiques des couches constituant l'empilement actif (vitesse de dépôt, densité, structure....).

Afin de démontrer l'amélioration sur l'effet mémoire du système électrochimique incorporant l'ensemble des caractéristiques de l'invention (l'amélioration de l'effet mémoire étant exprimé par l'augmentation de la transmission lumineuse TL en %), on donne ci-après des résultats de tests menés sur des échantillons conformes à l'invention :
Sur la base d'une cellule électrochromique incorporant 4 margeages partiels non optimisés selon les modalités de l'invention, on note une augmentation en TL de l'ordre de 7 à 10%/h.

Cette même cellule incorporant 4 margeages partiels, l'augmentation en TL est de l'ordre de 0.5 % /h

Cette même cellule incorporant 2 côtés avec margeage partiel et 2 côtés avec margeage total (avec toutefois aucun margeage partiel en retrait), l'augmentation en TL est de l'ordre de 4 à 5 % /h

Cette même cellule incorporant 2 côtés avec margeage partiel et 2 côtés avec simultanément margeage total et margeage partiel en retrait, l'augmentation en TL est de l'ordre de 0.5 % /h.

On incorpore maintenant à cette cellule la connectique :
On note que l'absence de bandes isolantes entre les fils et les zones de margeage au niveau de l'électrode supérieure induit une augmentation de TL de 5 à 6% /h et un mauvais margeage total en périphérie de la cellule (la troisième zone de margeage) induit une augmentation de TL de 10 à 12%/h.

Par contre un vitrage électrochrome incorporant cumulativement l'ensemble des dispositions de l'invention, voit passer l'augmentation de TL de 34%/h à 1 à 2 %/h.

Ce vitrage peut être utilisé en tant que vitrage pour le bâtiment, vitrage pour l'automobile, vitrage de véhicules industriels ou de transport collectif, ferroviaire, maritime, aérien, rétroviseurs, miroirs.

## Revendications

1. Procédé de traitement d'un vitrage électrochimique, comportant au moins un substrat (S1) porteur muni d'un empilement de couches fonctionnelles comprenant au moins, successivement :
- une première couche électroconductrice (1), une première couche électrochimiquement active (2) susceptible d'insérer de manière réversible des ions comme des cations tels que H+, Li+ ou des anions tels que OH-, notamment en un matériau électrochrome anodique, ou respectivement cathodique, une couche d'électrolyte (3), une seconde couche électrochimiquement active (4) susceptible d'insérer de manière réversible lesdits ions, notamment en un matériau électrochrome cathodique, ou respectivement anodique, une seconde couche électroconductrice (5), **caractérisé en ce que**
- l'on vient inhiber localement, au niveau d'une première zone de margeage partiel (A) selon une ligne fermée, la fonctionnalité d'au moins une des couches fonctionnelles, à l'exception d'une des couches électroconductrices et de l'une des couches électrochimiquement actives, notamment à l'exception de la première couche (1) électroconductrice, celle la plus proche du substrat porteur et de la première couche (2) électrochimiquement active, celle qui est associée à ladite première couche électroconductrice.
- l'on vient inhiber localement, au niveau d'une deuxième zone de margeage total (B) voisine de la première zone de margeage partiel (A), positionnée à l'extérieur par rapport au margeage partiel (A), la fonctionnalité de toutes les couches fonctionnelles sur la totalité de l'épaisseur de l'empilement de couches, ladite deuxième zone de margeage total (B) laissant apparaître au moins une portion de surface dudit substrat porteur.

2. Procédé selon la revendication 1, **caractérisé en ce que** l'on vient inhiber localement, la fonctionnalité de la première couche électroconductrice (1), de manière à délimiter tout autour dudit empilement une troisième zone de margeage total (C) périphérique dépourvue de couches, ladite troisième zone de margeage total laissant apparaître au moins une portion de surface dudit substrat porteur.

3. Procédé selon la revendication 2, **caractérisé en ce que** l'on vient inhiber localement la fonctionnalité de la première couche électroconductrice (1), de telle sorte que la troisième zone de margeage total (C) soit située en périphérie de la première zone de margeage partiel (A) et de la deuxième zone de margeage total (B).

4. Procédé selon l'une des revendications précédentes, **caractérisé en ce que** l'on inhibe localement la fonctionnalité d'au moins une des couches de l'empilement en la (les) dégradant sur son (leur) épaisseur, par un traitement thermique ou par irradiation laser ou par une attaque mécanique.

5. Procédé selon la revendication 4, **caractérisé en ce que** le traitement est effectué une fois le substrat muni de l'ensemble des couches fonctionnelles de l'empilement.

6. Procédé selon l'une des revendications précédentes, **caractérisé en ce que** l'on isole localement la fonctionnalité électrique de la dernière couche électroconductrice, celle la plus éloignée du substrat porteur par le dépôt d'une bande isolante (9) au niveau d'au moins une portion de surface dudit empilement, ladite portion de surface étant sensiblement positionnée au dessus de la première zone de margeage partiel (A) et/ou de la deuxième zone de margeage total (B).

7. Vitrage électrochimique de type électrochrome traité selon le procédé l'une des revendications 1 à 6, comprenant au moins un substrat (S1) porteur muni d'un empilement de couches fonctionnelles définissant une zone de dépôt et comprenant successivement :
- une première couche électroconductrice (1) (la plus proche du substrat),
- une première couche électrochimiquement active (2) susceptible d'insérer de manière réversible des ions comme des cations tels que H+, Li+ ou des anions tels que OH-, notamment en un matériau électrochrome anodique, ou respectivement cathodique,
- une couche d'électrolyte (3),
- une seconde couche électrochimiquement active (4) susceptible d'insérer de manière réversible lesdits ions, notamment en un matériau électrochrome cathodique, ou respectivement anodique,
- une seconde couche électroconductrice (5),
**caractérisé en ce que** l'empilement de couches fonctionnelles est désactivé, à l'exception de la première couche électrochimiquement active (2), au niveau d'au moins une première zone de margeage partiel (A) située le long d'au moins un bord de ladite zone de dépôt selon une ligne fermée, et **en ce que** l'empilement, comprenant toutes les couches fonctionnelles, est désactivé sur une partie au moins de sa périphérie, au niveau d'au moins une deuxième zone de margeage total (B) voisine de la première zone de margeage (A), positionnée à l'extérieur par rapport au premier margeage partiel, et située le long d'au moins un bord de ladite zone de dépôt.

8. Vitrage selon la revendication 7, **caractérisé en ce que** l'empilement de couches fonctionnelles est désactivé, à l'exception de la première couche électrochimiquement active (2), sur la périphérie de ladite zone de dépôt et respectivement le long de chacun des bords de ladite zone de dépôt.

9. Vitrage selon la revendication 7, **caractérisé en ce que** la première couche électroconductrice (1) est désactivée sur sa périphérie, au niveau d'une troisième zone de margeage total (C) située au voisinage du bord du substrat porteur (S1).

10. Vitrage selon l'une des revendications 7 à 9, **caractérisé en ce que** le vitrage électrochimique comporte des premières et des deuxième amenées de courant (6) en connexion électrique avec la première couche électroconductrice (1).

11. Vitrage selon la revendication 10, **caractérisé en ce que** les première et deuxième amenées de courant (6) sont situées respectivement selon deux bords contigus du substrat porteur (S1).

12. Vitrage selon l'une des revendications 10 ou 11, **caractérisé en ce que** les premières ou les deuxièmes amenées de courant (6) sont en connexion électrique par l'intermédiaire d'un réseau de fils (7) conducteurs/de bandes conductrices, éventuellement ondulés, ledit réseau (7) étant par ailleurs en connexion électrique au niveau de la deuxième couche (5) électroconductrice (la plus éloignée du substrat).

13. Vitrage selon la revendication 12, **caractérisé en ce que** le réseau conducteur (7) comporte une pluralité de fils essentiellement métalliques disposés en surface d'une feuille en polymère, notamment du type thermoplastique.

14. Vitrage selon l'une des revendications 12 ou 13, **caractérisé en ce que** les fils/bandes sont disposés essentiellement parallèlement les uns aux autres, de préférence selon une orientation essentiellement parallèle à la longueur ou la largeur de la deuxième couche électroconductrice, au moins une des extrémités desdits fils/bandes dépassant de la zone du substrat couverte par ladite deuxième couche électroconductrice sur au moins un de ses bords opposés, notamment d'au moins 0,5 mm.

15. Vitrage selon la revendication 14, **caractérisé en ce que** l'extrémité des fils/bandes se trouvant au niveau de la première zone de margeage partiel (A) et/ou de la deuxième zone de margeage total (B) est isolée électriquement du contact avec la zone active de la première couche électroconductrice (1), notamment par interposition de bande(s) de matériau isolant (9), lesdites bandes (9) étant interposées entre la deuxième couche électroconductrice (5) et ladite extrémité des fils/bandes.

16. Vitrage selon l'une des revendications 10 à 15, **caractérisé en ce qu'**au moins une des amenées de courant (6) est sous forme d'un clinquant, notamment une bande métallique, ou sous forme d'un ou plusieurs fils conducteurs, ou sous forme d'une amenée ponctuelle en matériau conducteur.

17. Vitrage selon l'une des revendications 10 à 16, **caractérisé en ce qu'**au moins une des amenées de courant (6) est réalisée à partir d'un émail conducteur électriquement, déposé entre une portion de surface du substrat porteur et la première couche électroconductrice.

18. Vitrage selon l'une des revendications 10 à 17, **caractérisé en ce que** l'amenée de courant (6) présente en surface une pluralité de rainures positionnées sensiblement transversalement à un axe principal de ladite amenée de courant de manière à délimiter des canaux.

19. Vitrage selon l'une des revendications 7 à 18, **caractérisé en ce que** l'empilement électroactif recouvre une zone de dépôt du substrat porteur qui est un polygone, un rectangle, un losange, un trapèze, un carré, un cercle, un demi- cercle, un ovale, tout parallélogramme.

20. Vitrage selon l'une des revendications 10 à 19, **caractérisé en ce qu'**il s'agit d'un système électrochrome, notamment du type « tout-solide », d'un système viologène, d'un système à cristaux liquides, d'un système à valve optique ou d'un système photovoltaïque.

21. Vitrage selon l'une des revendications 10 à 20, **caractérisé en ce qu'**il s'agit d'un vitrage électrochrome « tout-solide », notamment de structure feuilletée.

22. Vitrage selon la revendication 21, **caractérisé en ce que** le vitrage électrochrome comprend au moins un verre teinté dans la masse et/ou au moins un verre bombé et/ou un verre trempé.

23. Vitrage selon l'une des revendications 21 ou 22, **caractérisé en ce qu'**il comporte également au moins un des revêtements suivants: revêtement réfléchissant les infra-rouges, revêtement hydrophile, revêtement hydrophobe, revêtement photocatalytique à propriétés anti-salissures, revêtement anti- reflets, revêtement de blindage électromagnétique.

24. Vitrage selon l'une des revendications 7 à 23, **caractérisé en ce que** le substrat porteur est rigide, semi-rigide ou flexible.

## Patentansprüche

1. Verfahren zur Behandlung einer elektrochemischen Verglasung, umfassend wenigstens ein Trägersubstrat (S1), das mit einem Stapel von Funktionsschichten versehen ist, der nacheinander wenigstens umfasst:
- eine erste elektrisch leitende Schicht (1), eine erste elektrochemisch aktive Schicht (2), die geeignet ist, Ionen, wie Kationen wie H+, Li+ oder Anionen wie OH-, reversibel einzufügen, insbesondere aus einem elektrochromen anodischen bzw. kathodischen Material, eine Elektrolytschicht (3), eine zweite elektrochemisch aktive Schicht (4), die geeignet ist, die Ionen reversibel einzufügen, insbesondere aus einem elektrochromen kathodischen bzw. anodischen Material, eine zweite elektrisch leitende Schicht (5),
**dadurch gekennzeichnet, dass**
- in Höhe eines ersten Bereichs teilweiser Randentschichtung (A) entlang einer geschlossenen Linie, die Funktionalität von wenigstens einer der Funktionsschichten, mit Ausnahme von einer der elektrisch leitenden Schichten und von einer der elektrochemisch aktiven Schichten, insbesondere mit Ausnahme der ersten elektrisch leitenden Schicht (1), derjenigen, welche dem Trägersubstrat am nächsten liegt, und der ersten elektrochemisch aktiven Schicht (2), derjenigen, welche der ersten elektrisch leitenden Schicht zugeordnet ist, lokal inhibiert wird,
- in Höhe eines zweiten Bereichs vollständiger Randentschichtung (B), welcher dem ersten Bereich teilweiser Randentschichtung (A) benachbart ist, in Bezug auf die teilweise Randentschichtung (A) außerhalb positioniert ist, die Funktionalität aller Funktionsschichten über die gesamte Dicke des Schichtenstapels lokal inhibiert wird, wobei der zweite Bereich vollständiger Randentschichtung (B) wenigstens einen Flächenabschnitt des Trägersubstrats zum Vorschein kommen lässt.

2. Verfahren nach Anspruch 1, **dadurch gekennzeichnet, dass** die Funktionalität der ersten elektrisch leitenden Schicht (1) lokal inhibiert wird, so dass um den Stapel herum ein dritter umfangseitiger schichtloser Bereich vollständiger Randentschichtung (C) begrenzt wird, wobei der dritte Bereich vollständiger Randentschichtung wenigstens einen Flächenabschnitt des Trägersubstrats zum Vorschein kommen lässt.

3. Verfahren nach Anspruch 2, **dadurch gekennzeichnet, dass** die Funktionalität der ersten elektrisch leitenden Schicht (1) derart lokal inhibiert wird, dass der dritte Bereich vollständiger Randentschichtung (C) am Umfang des ersten Bereichs teilweiser Randentschichtung (A) und des zweiten Bereichs vollständiger Randentschichtung (B) gelegen ist.

4. Verfahren nach einem der vorhergehenden Ansprüche, **dadurch gekennzeichnet, dass** die Funktionalität von wenigstens einer der Schichten des Stapels dadurch lokal inhibiert wird, dass sie über ihre Dicke durch eine Wärmebehandlung oder durch Laserbestrahlung oder durch einen mechanischen Angriff abgebaut wird/werden.

5. Verfahren nach Anspruch 4, **dadurch gekennzeichnet, dass** die Behandlung durchgeführt wird, sobald das Substrat mit allen Funktionsschichten des Stapels versehen ist.

6. Verfahren nach einem der vorhergehenden Ansprüche, **dadurch gekennzeichnet, dass** die elektrische Funktionalität der letzten elektrisch leitenden Schicht, derjenigen, welche von dem Trägersubstrat am weitesten entfernt ist, durch das Auftragen eines Isolierbandes (9) im Bereich wenigstens eines Flächenabschnitts des Stapels lokal isoliert wird, wobei der Flächenabschnitt im Wesentlichen oberhalb des ersten Bereichs teilweiser Randentschichtung (A) und/oder des zweiten Bereichs vollständiger Randentschichtung (B) positioniert ist.

7. Elektrochemische Verglasung vom elektrochromen Typ, die gemäß dem Verfahren von einem der Ansprüche 1 bis 6 behandelt ist, mit wenigstens einem Trägersubstrat (S1), das mit einem Stapel von Funktionsschichten versehen ist, der einen Abscheidungsbereich definiert und nacheinander umfasst:
- eine erste elektrisch leitende Schicht (1) (die dem Substrat am nächsten gelegen ist),
- eine erste elektrochemisch aktive Schicht (2), die geeignet ist, Ionen, wie Kationen wie H+, Li+ oder Anionen wie OH-, reversibel einzufügen, insbesondere aus einem elektrochromen anodischen bzw. kathodischen Material,
- eine Elektrolytschicht (3),
- eine zweite elektrochemisch aktive Schicht (4), die geeignet ist, die Ionen reversibel einzufügen, insbesondere aus einem elektrochromen kathodischen bzw. anodischen Material,
- eine zweite elektrisch leitende Schicht (5),
**dadurch gekennzeichnet, dass** der Stapel von Funktionsschichten, mit Ausnahme der ersten elektrochemisch aktiven Schicht (2), in Höhe wenigstens eines ersten Bereichs teilweiser Randentschichtung (A), der entlang wenigstens eines Randes des Abscheidungsbereiches entlang einer geschlossenen Linie gelegen ist, deaktiviert ist, und dass der Stapel, welcher alle Funktionsschichten umfasst, über wenigstens einen Teil seines Umfangs, in Höhe wenigstens eines zweiten Bereichs vollständiger Randentschichtung (B), der dem ersten Randentschichtungsbereich (A) benachbart ist, in Bezug auf die erste teilweise Randentschichtung außerhalb positioniert ist und entlang wenigstens eines Randes des Abscheidungsbereiches gelegen ist, deaktiviert ist.

8. Verglasung nach Anspruch 7, **dadurch gekennzeichnet, dass** der Stapel von Funktionsschichten, mit Ausnahme der ersten elektrochemisch aktiven Schicht (2), über den Umfang des Abscheidungsbereiches bzw. entlang eines jeden der Ränder des Abscheidungsbereiches deaktiviert ist.

9. Verglasung nach Anspruch 7, **dadurch gekennzeichnet, dass** die erste elektrisch leitende Schicht (1) über ihren Umfang, in Höhe eines dritten Bereichs vollständiger Randentschichtung (C), welcher in der Nähe des Randes des Trägersubstrats (S1) gelegen ist, deaktiviert ist.

10. Verglasung nach einem der Ansprüche 7 bis 9, **dadurch gekennzeichnet, dass** die elektrochemische Verglasung erste und zweite Stromzuführungen (6) in elektrischer Verbindung mit der ersten elektrisch leitenden Schicht (1) umfasst.

11. Verglasung nach Anspruch 10, **dadurch gekennzeichnet, dass** die erste und die zweite Stromzuführung (6) jeweils entlang von zwei angrenzenden Rändern des Trägersubstrats (S1) gelegen sind.

12. Verglasung nach einem der Ansprüche 10 oder 11, **dadurch gekennzeichnet, dass** die ersten und die zweiten Stromzuführungen (6) mittels eines Netzes (7) aus leitenden Drähten/leitenden Bändern, die eventuell gewellt sind, in elektrischer Verbindung sind, wobei das Netz (7) darüber hinaus im Bereich der zweiten elektrisch leitenden Schicht (5) (die von dem Substrat am weitesten entfernt ist) in elektrischer Verbindung ist.

13. Verglasung nach Anspruch 12, **dadurch gekennzeichnet, dass** das Leitungsnetz (7) eine Vielzahl von im Wesentlichen metallischen Drähten umfasst, die an der Oberfläche einer Polymerfolie, insbesondere vom thermoplastischen Typ, angeordnet sind.

14. Verglasung nach einem der Ansprüche 12 oder 13, **dadurch gekennzeichnet, dass** die Drähte/Bänder im Wesentlichen parallel zueinander angeordnet sind, vorzugsweise in einer zu der Länge oder der Breite der zweiten elektrisch leitenden Schicht im Wesentlichen parallelen Ausrichtung, wobei wenigstens eines der Enden der Drähte/Bänder über den Bereich des Substrats, der mit der zweiten elektrisch leitenden Schicht an wenigstens einem seiner gegenüberliegenden Ränder bedeckt ist, insbesondere um wenigstens 0,5 mm hinausragt.

15. Verglasung nach Anspruch 14, **dadurch gekennzeichnet, dass** das Ende der Drähte/Bänder, das sich in Höhe des ersten Bereichs teilweiser Randentschichtung (A) und/oder des zweiten Bereichs vollständiger Randentschichtung (B) befindet, von dem Kontakt mit dem aktiven Bereich der ersten elektrisch leitenden Schicht (1) elektrisch isoliert ist, insbesondere durch Einfügen eines Bandes/von Bändern aus Isoliermaterial (9), wobei die Bänder (9) zwischen der zweiten elektrisch leitenden Schicht (5) und dem Ende der Drähte/Bänder eingefügt sind.

16. Verglasung nach einem der Ansprüche 10 bis 15, **dadurch gekennzeichnet, dass** wenigstens eine der Stromzuführungen (6) in Form einer Metallfolie, insbesondere eines Metallstreifens, oder in Form eines oder mehrerer Leitungsdrähte oder in Form einer punktuellen Zuführung aus leitendem Material vorliegt.

17. Verglasung nach einem der Ansprüche 10 bis 16, **dadurch gekennzeichnet, dass** wenigstens eine der Stromzuführungen (6) aus einem elektrisch leitenden Email, das zwischen einem Flächenabschnitt des Trägersubstrats und der ersten elektrisch leitenden Schicht abgeschieden ist, gefertigt ist.

18. Verglasung nach einem der Ansprüche 10 bis 17, **dadurch gekennzeichnet, dass** die Stromzuführung (6) an der Oberfläche eine Vielzahl von Nuten aufweist, die im Wesentlichen quer zu einer Hauptachse der Stromzuführung positioniert sind, um Kanäle zu begrenzen.

19. Verglasung nach einem der Ansprüche 7 bis 18, **dadurch gekennzeichnet, dass** der elektrisch aktive Stapel einen Abscheidungsbereich des Trägersubstrats, das ein Vieleck, ein Rechteck, eine Raute, ein Trapez, ein Quadrat, ein Kreis, ein Halbkreis, ein Oval, jedwedes Parallelogramm ist, überdeckt.

20. Verglasung nach einem der Ansprüche 10 bis 19, **dadurch gekennzeichnet, dass** es sich um ein elektrochromes System, insbesondere vom Typ "vollständig fest", um ein Viologen-System, um ein Flüssigkristall-System, um ein System mit optischem Ventil oder um ein Photovoltaik-System handelt.

21. Verglasung nach einem der Ansprüche 10 bis 20, **dadurch gekennzeichnet, dass** es sich um eine "vollständig feste" elektrochrome Verglasung, insbesondere mit Verbundstruktur handelt.

22. Verglasung nach Anspruch 21, **dadurch gekennzeichnet, dass** die elektrochrome Verglasung wenigstens ein in der Masse gefärbtes Glas und/oder wenigstens ein gebogenes Glas und/oder ein vorgespanntes Glas umfasst.

23. Verglasung nach einem der Ansprüche 21 oder 22, **dadurch gekennzeichnet, dass** sie auch wenigstens eine der folgenden Beschichtungen umfasst: infrarotreflektierende Beschichtung, hydrophile Beschichtung, hydrophobe Beschichtung, photokatalytische Beschichtung mit verschmutzungshemmenden Eigenschaften, Antireflex-Beschichtung, elektromagnetische Abschirmungsbeschichtung.

24. Verglasung nach einem der Ansprüche 7 bis 23, **dadurch gekennzeichnet, dass** das Trägersubstrat steif, halbsteif oder flexibel ist.

## Claims

1. Method of treating an electrochemical glazing assembly having at least one carrier substrate (S1) provided with a functional multilayer comprising at least, in succession:
- a first electroconductive layer (1), a first electrochemically active layer (2) capable of reversibly inserting ions, such as cations like H⁺ and Li⁺, or anions like OH⁻, especially made of an anodic, or respectively cathodic, electrochromic material, an electrolyte layer (3), a second electrochemically active layer (4) capable of reversibly inserting said ions, especially made of a cathodic, or respectively anodic, electrochromic material, and a second electroconductive layer (5),
**characterized in that**:
- the functionality of at least one of the functional layers, with the exception of one of the electroconductive layers and of one of the electrochemically active layers, especially with the exception of the first electroconductive layer (1), the one closest to the carrier substrate, and of the first electrochemically active layer (2), the one associated with said first electroconductive layer, is locally inhibited in a first, partial margination zone (A) forming a closed line; and
- the functionality of all the functional layers is locally inhibited, in a second, total margination zone (B) that is close to the first, partial margination zone (A) and positioned to the outside of the partial margination (A), over the entire thickness of the multilayer, said second, total margination zone (B) exposing at least one surface portion of said carrier substrate.

2. Method according to Claim 1, **characterized in that** the functionality of the first electroconductive layer (1) is locally inhibited so as to define, all around said multilayer, a peripheral third, total margination zone (C) devoid of layers, said third, total margination zone exposing at least one surface portion of said carrier substrate.

3. Method according to Claim 2, **characterized in that** the functionality of the first electroconductive layer (1) is locally inhibited in such a way that the third, total margination zone (C) is located on the periphery of the first, partial margination zone (A) and of the second, total margination zone (B).

4. Method according to one of the preceding claims, **characterized in that** the functionality of at least one of the layers of the multilayer is locally inhibited by being degraded over its (their) thickness by a heat treatment or by laser irradiation or by mechanical abrasion.

5. Method according to Claim 4, **characterized in that** the treatment is carried out once the substrate has been provided with all of the functional layers of the multilayer coating.

6. Method according to one of the preceding claims, **characterized in that** the electrical functionality of the last electroconductive layer, the one furthest from the carrier substrate, is locally isolated by an insulating band (9) being deposited over at least one surface portion of said multilayer, said surface portion being approximately positioned above the first, partial margination zone (A) and/or the second, total margination zone (B).

7. Electrochemical glazing assembly of the electrochromic type treated according to the method of one of Claims 1 to 6, comprising at least one carrier substrate (S1) provided with a functional multilayer defining a deposition zone and comprising, in succession:
- a first electroconductive layer (1) (the one closest to the substrate);
- a first electrochemically active layer (2) capable of reversibly inserting ions, such as cations like H⁺ and Li⁺, or anions like OH⁻, especially made of an anodic, or respectively cathodic, electrochromic material;
- an electrolyte layer (3);
- a second electrochemically active layer (4) capable of reversibly inserting said ions, especially made of a cathodic, or respectively anodic, electrochromic material; and
- a second electroconductive layer (5),
**characterized in that** the functional multilayer is deactivated, with the exception of the first electrochemically active layer (2), in at least a first, partial margination zone (A) located along at least one edge of said deposition zone forming a closed line, and **in that** the multilayer comprising all the functional layers is deactivated over at least part of its periphery, in at least a second, total margination zone (B) that is close to the first, partial margination zone (A) and positioned to the outside of the first partial margination, and located along at least one edge of said deposition zone.

8. Glazing assembly according to Claim 7, **characterized in that** the functional multilayer is deactivated, with the exception of the first electrochemically active layer (2), on the periphery of said deposition zone and respectively along each of the edges of said deposition zone.

9. Glazing assembly according to Claim 7, **characterized in that** the first electroconductive layer (1) is deactivated on its periphery, in a third, total margination zone (C) located near the edge of the carrier substrate (S1).

10. Glazing assembly according to one of Claims 7 to 9, **characterized in that** the electrochemical glazing assembly includes first and second current leads (6) for electrical connection to the first electroconductive layer (1).

11. Glazing assembly according to Claim 10, **characterized in that** the first and second current leads (6) are located respectively along two contiguous edges of the carrier substrate (S1).

12. Glazing assembly according to either of Claims 10 and 11, **characterized in that** the first or second current leads (6) are electrically connected via an array (7) of conducting wires/strips, these optionally being corrugated, said array (7) also being electrically connected to the second electroconductive layer (5) (the one furthest from the substrate).

13. Glazing assembly according to Claim 12, **characterized in that** the conducting array (7) comprises a plurality of essentially metal wires placed on the surface of a sheet of polymer, especially of the thermoplastic type.

14. Glaznig assembly according to either of Claims 12 and 13, **characterized in that** the wires/strips are placed essentially parallel to one another, preferably in an orientation essentially parallel to the length or the width of the second electroconductive layer, at least one of the ends of said wires/strips extending beyond that zone of the substrate which is covered by said second electroconductive layer on at least one of its opposed edges, especially by at least 0.5 mm.

15. Glazing assembly according to Claim 14, **characterized in that** the end of the wires/strips lying in the first, partial margination zone (A) and/or the second, total margination zone (B) is electrically isolated from contact with the active zone of the first electroconductive layer (1), especially by interposing one or more bands (9) of insulating material, said bands (9) being interposed between the second electroconductive layer (5) and said end of the wires/strips.

16. Glazing assembly according to one of Claims 10 to 15, **characterized in that** at least one of the current leads (6) is in the form of a shim, especially a metal strip, or in the form of one or more conducting wires or in the form of a discrete lead made of conductive material.

17. Glazing assembly according to one of Claims 10 to 16, **characterized in that** at least one of the current leads (6) is made from an electrically conductive enamel placed between a surface portion of the carrier substrate and the first electroconductive layer.

18. Glazing assembly according to one of Claims 10 to 17, **characterized in that** the current lead (6) has, on the surface, a plurality of grooves positioned approximately transverse to a principal axis of said current lead so as to define channels.

19. Glazing assembly according to one of Claims 7 to 18, **characterized in that** the electroactive multilayer covers a deposition zone of the carrier substrate, which zone is a polygon, a rectangle, a rhombus, a trapezoid, a square, a circle, a semicircle, an oval or any parallelogram.

20. Glazing assembly according to one of Claims 10 to 19, **characterized in that** it is an electrochromic system, especially of the "all-solid-state" type, a viologen-based system, a liquid-crystal system, an optical-valve system or a photovoltaic system.

21. Glazing assembly according to one of Claims 10 to 20, **characterized in that** it is an "all-solid-state" electrochromic glazing assembly, especially with a laminated structure.

22. Glazing assembly according to Claim 21, **characterized in that** the electrochromic glazing assembly comprises at least one bulk-tinted glass pane and/or at least one curved glass pane and/or a toughened glass pane.

23. Glazing assembly according to either of Claims 21 and 22, **characterized in that** it also includes at least one of the following coatings: an infrared reflective coating, a hydrophilic coating, a hydrophobic coating, a photocatalytic coating with antisoiling properties, an antireflection coating, an electromagnetic shielding coating.

24. Glazing assembly according to one of Claims 7 to 23, **characterized in that** the carrier substrate is rigid, semirigid or flexible.
